# EUROPÄISCHE PATENTSCHRIFT

(11) **EP 1 247 923 B1**
(45) Veröffentlichungstag und Bekanntmachung des Hinweises auf die Patenterteilung: **31.03.2004**
(21) Anmeldenummer: 02006856.5
(22) Anmeldetag: 06.11.1999
(51) Int. Cl.: E04F 15/20, B32B 21/00

(54) **Fussbodenbelag mit Trittschalldämpfung und Verfahren für seine Herstellung**
Flooring with tread sound-proofing and process for manufacturing it
Revêtement de sol doté d'une isolation sonore contre les bruits de pas et procédé pour sa fabrication

(30) Priorität: 31.07.1999 DE 19936127
(43) Veröffentlichungstag der Anmeldung: 09.10.2002
(62) Teilanmeldung aus: 99957285.2
(73) Patentinhaber: Kronospan Technical Co. Ltd., 2404 Engomi, Nicosia (CY)
(72) Erfinder: Döhring, Dieter Dr., 01561 Lampertswalde (DE); Devantier, Bernd Dr., 01462 Mobschatz (DE); Emmler, Rico Dipl.-Ing., 01307 Dresden (DE)
(74) Vertreter: Gille Hrabal Struck Neidlein Prop Roos

(56) Entgegenhaltungen:
- EP-A- 0 864 712
- WO-A-93/24295
- DE-A- 3 835 638
- GB-A- 2 024 907

## Beschreibung

Die Erfindung betrifft einen Fußbodenbelag, wie er in Häusern und Wohnungen vielfach verwendet wird, sowie ein Herstellungsverfahren für den Fußbodenbelag.

Ein starrer Fußbodenbelag kann aus Holz, Holzwerkstoffen und/oder aus Kunststoff bestehen. Bekannt sind u. a. Laminatfußböden, die aus einzelnen Paneelen zusammengesetzt sind und schwimmend verlegt werden. Ein einzelnes Paneel besteht beispielsweise aus einer HDF-Trägerplatte sowie einer hierauf aufgebrachten Laminatschicht, die u. a. für das Aussehen des Fußbodens verantwortlich ist.

Bewegen sich Personen in einem Raum, der mit starren Fußbodenpaneelen ausgestattet ist, so ist die Geräuschentwicklung deutlich größer als bei Räumen, die mit Teppichen oder elastischen Bodenbelägen wie PVC ausgelegt sind. Die Geräuschentwicklung beruht auf Reflektionen von Stoßwellen, die beim Begehen in den Boden eingeleitet werden. Das Amplitudenspektrum der Stoß- bzw. Schallwellen hängt von den Grenzen Raum -Boden, Boden - Untergrund sowie von der Dämpfung in den verschiedenen Schichten ab. Die Geräuschentwicklung Ist dann besonders groß, wenn zwischen zwei Schichten, also z. B. zwischen dem Laminatfußboden und dem darunter befindlichen Estrich eine Luftschicht verbleibt.

Aus der WO 93/24295 Ist ein Holzbelag für einen Fußboden bekannt, der an der Unterseite u. a. zwecks Schalldämmung eine Schicht aus thermoplastischem Material aufweist, bei der Stücke aus Kunststoffmaterial miteinander verbunden worden sind.

Auf diese Weise entstehen Lufteinschlüsse Innerhalb der Schicht aus thermoplastischem Material sowie an der Grenzfläche zwischen der thermoplastischen Schicht und dem eigentlichen Holzbelag. Wie bereits Im vorangegangenen Absatz erläutert, wirkt sich die verbleibende Luft zwischen den Schichten nachtellhaft auf die Geräuschentwicklung aus.

Aus der EP 0 864 712 A2 Ist bekannt, unterhalb eines Laminatfußbodens eine Dämmmatte aufzukleben, die aus einem flexiblen, thermoplastischem Kunststoff mit viskoelastischen Verhalten gefertigt ist. Die Dichte dieser Schicht beträgt 2g/cm³. Einem Fachmann Ist bekannt, dass derart schwere Folien dazu dienen, einen besonders guten Kontakt zwischen Laminatbodenbelag und dem Untergrund herzustellen, um so Schall vom Belag In den Untergrund einleiten zu können. Es lässt sich mit einer Dämmmatte von 2 mm Dicke eine Reduzierung des Schallpegels von 3 dB erzielen.

Um die Geräuschentwicklung beim Begehen herabzusetzen, werden verschiedene mattenförmige Materialien wie Noppaschaum, Kork, polymergebundene Matten aus Altgummi und Kork, Wellpappe oder weiche Holzfaservliese als Unterlage unter einem starren Bodenbelag oberhalb des Estrichs eingesetzt. Die hierdurch erzielbare schalldämpfende Wirkung ist jedoch unbefriedigend. Daher wurde bereits versucht, die genannten mattenförmigen Materialien direkt auf der Bodenrückseite eines starren Fußbodenbelages, also z. B.. auf den Boden einer Fußbodenpaneele zu kleben. Nachteilhaft muß hierfür ein hoher technischer Aufwand betrieben werden. Folglich sind die Kosten hoch. Insgesamt ist die erreichte Schallreduzierung im Verhältnis zum technischen Aufwand unbefriedigend.

So ist aus der Druckschrift DE 196 20 987 Cl eine Dämmfolie bekannt, die mit einem Klebestreifen ausgerüstet ist. Es ist vorgesehen, die Dämmfolie auf der Unterseite eines starren Fußbodenbelages aufzukleben, um so eine Geräuschentwicklung beim Begehen des Fußbodens herabzusetzen.

Aus der Druckschricht DE 43 29 766 A1 ist bekannt, einen polymeren Werkstoff zur Trittschalldämmung eines Bodens vorzusehen.

Gemäß der Druckschrift DE 38 35 638 A1 wird ein Dämmaterial aus expandierfähigem Polystyrol als Dämmschicht bei starren Fußbodenbelägen eingesetzt.

Gegenüber dem vorgenannten Stand der Technik ist es Aufgabe der Erfindung, einen Fußbodenbelag zu schaffen, der über gute schalldämpfende Eigenschaften verfügt, ohne hierfür einen unangemessen hohen technischen Aufwand betreiben zu müssen. Aufgabe der Erfindung ist ferner die Schaffung eines Verfahrens, mit dem der erfindungsgemäße Fußbodenbelag auf einfache Weise hergestellt werden kann.

Die Aufgabe der Erfindung wird durch einen Fußbodenbelag mit den Merkmalen des Anspruches 1 gelöst. Ein Verfahren zur Herstellung des Fußbodenbelages weist die Merkmale des Anspruches 6 auf. Vorteilhafte Ausgestaltungen ergeben sich aus den nachgeordneten Ansprüchen.

Der Fußbodenbelag nach Anspruch 1 weist auf seiner Unterseite eine Schicht aus thermoplastischem Material auf, welches ein ausgeprägtes physikalisches Relaxationsverhalten bei Raumtemperatur zeigt. Die Schicht ist fest mit dem Fußbodenbelag verbunden. Der Fußbodenbelag besteht aus Holz oder Holzwerkstoffen.

Thermoplastisches Material ist ein solches, welches sich bei Überschreiten einer materialabhängigen Temperatur erweicht und fließfähig wird. In diesem Zustand ist das Material verformbar und kann auf die Unterseite des Fußbodenbelages durch Streichen oder Aufwalzen aufgebracht und so im Sinne der Erfindung fest mit dem Fußbodenbelag verbunden werden.

Wird die vorgenannte Temperatur unterschritten, so verfestigt sich das Material, und es treten die plastisch/ elastischen Eigenschaften in Erscheinung.

Die vorgenannten Eigenschaften des thermoplastischen Materials ermöglichen es, dieses bei erhöhten Temperaturen mit der Unterseite des starren Fußbodenbelages durch Aufstreichen oder Aufwalzen fest zu verbinden. Durch die feste Verbindung werden die Schallwellen direkt in die schalldämpfende Schicht ohne Reflexion an der Grenzschicht übertragen. Damit entfällt eine wesentliche Ursache für eine fehlende Schalldämpfung, die bei Fußböden gemäß eingangs genanntem Stand der Technik problematisch ist. Es resultiert eine wesentlich verbesserte Schalldämpfung.

Da das Material lediglich erwärmt und aufgestrichen oder aufgewalzt werden muß, ist die Herstellung einfach. Ein hoher technischer Aufwand muß somit nicht betrieben werden.

Als zweckmäßig hat sich eine Stärke von wenigstens 0,1 mm der schalldämpfenden Schicht ergeben. Bei einer Stärke von 5 mm der schalldämpfenden Schicht aus thermoplastischem Material steht der erforderliche Materialaufwand in einem wirtschaftlichen Verhältnis zum erzielbaren Effekt. In Versuchen hat sich eine Stärke von 0,7 mm als vorteilhaft herausgestellt.

Selbstverständlich ist die geeignetste Schichtdicke materialabhängig. Im jeweiligen Einzelfall variiert diese also.

Als thermoplastisches Material werden insbesondere Polymerisate oder Copolymerisate vorgesehen, die im Raumtemperaturbereich ein ausgeprägtes physikalisches Relaxationsverhalten zeigen. Beispiele für thermoplastische Polymere mit ausgeprägtem physikalischen Relaxationsverhalten im Raumtemperaturbereich sind Polyvinylpropionat oder Polyvinylacetat. Dagegen ist beispielsweise Polycarbonat mit seiner hohen Glastemperatur ein völlig ungeeignetes Material. Meßtechnisch zeigen geeignete Materialien beispielsweise bei der Darstellung des Torsionsmoduls in Abhängigkeit von der Temperatur im Verlustmodul tan δ im Raumtemperaturbereich bzw. unmittelbar angrenzenden Temperaturbereichen ein ausgeprägtes Maximum. Die physikalischen Grundlagen einschließlich beispielhafter Kurven enthalten Lehrbücher der Polymerphysik wie beispielsweise: Chemie, Physik und Technologie der Kunststoffe Band 6, Kunststoffe 1 - Struktur und physikalisches Verhalten der Kunststoffe -, Kapitel 4; K. A. Wolf, Springer - Verlag 1962.

Zeigt das Material ein ausgeprägtes physikalisches Relaxationsverhalten im Raumtemperaturbereich, so wird eine besonders gute Dämpfung erzielt, da besonders gut kinetische Energie in Wärme umgewandelt wird.

Beispiele für Materialien, die ein besonders gutes Relaxationsverhalten bei Raumtemperatur zeigen, sind:

Polyvinylformale, Polyvinylbutyrale, Polyvinyläther, Polyisobutene oder Copolymerisate wie z. B. Terpolymerisate aus Acrylnitril, Butadien und Styrol (ABS), Copolymere aus Vinylchlorid und 2-Athylhexylacrylat, Copolymere aus Vinylacetat und Vinyllaurat oder auch Polymermischungen dieser Polymere auch unter Zusatz typischer Polymerweichmacher.

Ein weiter verbesserter schalldämpfender Effekt wird bewirkt, indem Polymerisaten oder Copolymerisaten Füllstoffe, insbesondere leichte organische Füllstoffe mit einer Dichte kleiner als 1 g/cm³ wie zum Beispiel Holzmehl zugesetzt werden. Derartige Füllstoffe können bis zu 90 Masse-% zugesetzt werden. Vorteilhaft ist ein Zusatz von wenigstens 10 Masse-%. Insbesondere sollten 30 Masse-% zugesetzt sein.

In einer weiteren vorteilhaften Ausgestaltung der Erfindung wird das thermoplastische Material so gewählt, daß es adhäsive Eigenschaften aufweist. Adhäsion ist ein polymertypischer Fachbegriff. Ein Beispiel für ein Material, welches im Sinne der Erfindung adhäsive Eigenschaften aufweist, sind thermoplastische Kautschuke.

Wird das Material so gewählt, daß es adhäsive Eigenschaften aufweist, so haftet es auf dem Fußbodenuntergrund. Die Haftung wird vorzugsweise so ausgebildet, daß der Fußbodenbelag ohne aufwendige technische Hilfsmittel wieder beseitigt werden kann. Eine Zwischenschicht (Luftschicht) zwischen dem Fußbodenuntergrund und der thermoplastischen Schicht wird so minimiert. Schall wird daher in weiter verbesserter Weise gedämpft.

Der anspruchsgemäße Fußbodenbelag wird hergestellt, indem thermoplastisches Material so erwärmt wird, daß es fließfähig wird. Das erwärmte Material wird auf die Unterseite von Elementen des Fußbodenbelages oder auf eine Trägerplatte für, einen solchen Fußbodenbelag aufgestrichen oder aufgewalzt. Anschließend werden die Fußbodenelemente bzw. die Trägerplatte mit dem aufgebrachten thermoplastischen Material abgekühlt.

Die Erfindung wird anhand des nachfolgenden Ausführungsbeispiels näher erläutert. Als starrer Fußbodenbelag ist eine Fußbodenpaneele im Format 1285 x 185 x 8 mm vorgesehen. Diese besteht aus einer 0,8 mm starken Hochdrucklaminatschicht, einer 6,4 mm dicken HDF-Trägerplatte mit einer Dichte von 870 kg/m³ sowie einer 0,8 mm starken Hochdrucklaminatgegenzugschicht. Auf die Fußbodenpaneele wird mittels eines Streichaggregates auf der Paneelenrückseite eine thermoplastische Schicht aus einem Copolymer mit einer Temperatur von 150°C aufgetragen. Das Copolymer besteht aus Vinylacetat mit einem Acrylsäureesteranteil von 12 Masse-%. Die Stärke der aufgetragenen Schicht beträgt 0,7 mm.

In einem akustischen Versuchsraum wurde der Schallpegel beim Begehen einer verlegten Fläche von 20 m² des erfindungsgemäß hergestellten Bodens im Vergleich zu einer unbehandelten Fläche gemessen. Dem unbehandelten Boden wurde eine Noppaschaummatte aus Polyethylen in einer Stärke von 3 mm unterlegt. Der beschichtete Boden wurde ohne zusätzliche Dämmaterialien verlegt. Im Ergebnis der Schallmessungen war für den unbehandelten Boden im Meßraum ein Schallpegel von 78 dB und für den erfindungsgemäß mit Schalldämpfung ausgerüsteten Boden ein Schallpegel von 67 dB bei gleicher mechanischer Anregung festzustellen. Da gleichzeitig eine Frequenzverschiebung von höheren zu tieferen Tönen stattfand, wurde der behandelte Boden als wesentlich leiser empfunden.

## Patentansprüche

1. Fußbodenbelag mit aus Holz oder Holzwerkstoffen bestehenden starren Laminat- oder Parkettpaneelen und einer Schicht, die mit der Unterseite der Paneele fest verbunden ist,
**dadurch gekennzeichnet, dass**
die Schicht aus thermoplastischem Material besteht, welches ein ausgeprägtes physikalisches Relaxationsverhalten bei Raumtemperatur zeigt.

2. Fußbodenbelag nach Anspruch 1, bei dem die aus thermoplastischem Material bestehende Schicht 0,1 bis 0,7 mm dick ist.

3. Fußbodenbelag nach Anspruch 1 oder 2, bei dem als thermoplastisches Material Polyvinylformale, Polyvinylbutyrale, Polyvinyläther, Polyisobutene, Copolymerisate wie Terpolymerisate aus Acrylnitril, Butadien und Styrol (ABS), Copolymere aus Vinylchlorid und 2-Athylhexylacrylat, Copolymere aus Vinylacetat und Vinyllaurat oder Mischungen dieser Polymere, auch unter Zusatz typischer Polymerweichmacher, eingesetzt sind.

4. Fußbodenbelag nach einem der vorhergehenden Ansprüche, bei dem ein thermoplastisches Material mit adhäsiven Eigenschaften eingesetzt ist.

5. Fußbodenbelag nach einem der vorhergehenden Ansprüche, bei dem die Schicht aus thermoplastischem Material durch Aufstreichen oder Aufwalzen des im fließfähigen Zustand befindlichen thermoplastischen Materials auf die Unterseite der Fußbodenpaneele herstellbar ist.

6. Verfahren zur Herstellung eines Fußbodenbelages nach einem der vorhergehenden Ansprüche, bei dem thermoplastisches Material erwärmt und im fließfähigen Zustand auf die Unterseite der Laminatoder Parkettpaneele aufgestrichenen oder aufgewalzt wird.

## Claims

1. Flooring with rigid laminated or parquet panels of wood or wood materials and a layer which is firmly fixed with the underside of the panels,
**characterised in that**
the layer consists of thermoplastic material which exhibits an obvious physical relaxation character at room temperature.

2. Flooring according to Claim 1, in which the layer consisting of thermoplastic material is 0.1 to 0.7 mm thick.

3. Flooring according to Claim 1 or 2, in which the thermoplastic material comprises of polyvinylformal, polyvinylbutyral, polyvinylether, polyisobutene, copolymers such as terpolymerisates of acrylnitrile, butadiene and styrol (ABS), copolymers of vinyl fluoride and 2-ethylhexylacrylate, copolymers of vinyl acetate and vinyl laurate or mixtures of these polymers, also with the addition of typical polymer softeners.

4. Flooring according to one of the preceding claims, in which a thermoplastic material with adhesive qualities is applied.

5. Flooring according to one of the preceding claims, in which the layer of thermoplastic material is manufactured by brushing on or rolling on the thermoplastic material in a fluid condition to the underside of the flooring panels.

6. Method for manufacturing a flooring according to one of the preceding claims, in which the thermoplastic material is heated and is brushed on or rolled on in a fluid condition to the underside of the laminated or parquet panels.

## Revendications

1. Revêtement de sol, comprenant des panneaux de laminé ou de parquet rigides, formés de bois et de matériaux ligneux et d'une couche reliée rigidement à la face inférieure des panneaux,
**caractérisé en ce que**
la couche est formée d'un matériau thermoplastique qui présente un comportement de relaxation physique accentué à la température ambiante.

2. Revêtement de sol, selon la revendication 1, pour lequel la couche formée d'un matériau thermoplastique est d'une épaisseur comprise dans la plage allant de 0,1 à 0,7 mm.

3. Revêtement de sol, selon la revendication 1 ou 2, dans lequel, à titre de matériau thermoplastique, on utilise des polyvinyl formals, polyvinyl butyrals, des polyvinyl éthers, des polyisobutènes, des copolymérisats, tels que des terpolymérisats d'acrylnitrile, butadiène et styrène (ABS), des copolymères de chlorure de vinyle et de 2-éthylhexylacrylate, des copolymères d'acétate de vinyle et de laurate de vinyle, ou des mélanges de ces polymères, également avec addition de plastifiants typiques pour polymères.

4. Revêtement de sol, selon l'une des revendications précédentes, dans lequel est utilisé un matériau thermoplastique ayant des propriétés adhésives.

5. Revêtement de sol, selon l'une des revendications précédentes, dans lequel la couche de matériau thermoplastique peut être fabriquée par enduction ou application au rouleau sur la face inférieure des panneaux de sol du matériau thermoplastique se trouvant à l'état fluide.

6. Procédé de fabrication d'un revêtement de sol, selon l'une des revendications précédentes, dans lequel le matériau thermoplastique est chauffé et est appliqué à l'état fluide sur la face inférieure des panneaux de laminé ou de parquet, par enduction ou application au rouleau.
